# EUROPEAN PATENT SPECIFICATION

(11) **EP 1 924 158 B1**
(45) Date of publication and mention of the grant of the patent: **02.06.2010**
(21) Application number: 06795656.5
(22) Date of filing: 15.08.2006
(51) Int. Cl.: A23L 1/22, A23L 2/38, A23L 2/56

(54) **CLEAR FLAVOR MICROEMULSIONS COMPRISING SUGAR ESTERS OF FATTY ACIDS**
FREIE GESCHMACKSMIKROEMULSIONEN MIT ZUCKERESTERN AUS FETTSÄUREN
MICROEMULSIONS LIMPIDES AROMATISEES COMPRENANT DES ESTERS DE SUCRE D'ACIDES GRAS

(30) Priority: 02.09.2005 US 713661 P
(43) Date of publication of application: 28.05.2008
(73) Proprietor: Firmenich S.A., 1211 Geneva 8 (CH)
(72) Inventor: SKIFF, Ronald, Harry, Whippany, NJ 07981 (US); BAAKLINI, Joseph, Ewing, NJ 08618 (US); VLAD, Florin, Joseph, Annandale, NJ 08801 (US)
(74) Representative: Dale, Gavin Christopher
(86) International application number: PCT/IB2006/052806
(87) International publication number: WO 2007/026271

(56) References cited:
- JP-A- 2000 300 225
- US-A- 4 835 002
- US-B2- 6 902 756

## Description

### Technical field

The present invention relates to the flavor industry. It concerns more particularly a clear, thermodynamically stable and concentrated oil-in-water microemulsion comprising flavor oil, a food grade surfactant forming a "surfactant system" with a defined hydrophilic lipophilic balance, and having an optimized ratio of surfactant versus a co-solvent. The invention also relates to the use of said microemulsion in the formulation of clear beverages.

### Background of the Invention

Emulsions have been widely used in beverage technology, cosmetics, or pharmaceutical formulations for many years. Nevertheless, their limited thermodynamic stability, which means that they separate into their two original liquid phases on standing, represents the biggest drawback in application. Due to their time limited thermodynamic stability, all the emulsion based products will undergo oil-ringing formation, and finally phase separation.

Unlike emulsions, the microemulsions, including the micellar solutions, are usually transparent dispersions that form spontaneously without the need of energy input, when the compounds thereof are properly mixed with each other. Due to the very small size of dispersed oil-droplets, which in most cases is less than 140 nm in diameter, the visible light cannot be scattered and therefore microemulsions appear as clear or translucent isotropic solutions. A classical oil-in-water microemulsion consists of water, a co-solvent such as alcohol, oil and one or more surfactants and co-surfactants. Although microemulsions form spontaneously, when they form, the selection of the components thereof and their relative amounts are very critical for their formation, their final characteristics such as optical appearance, and their organoleptic and thermodynamic time-stability. In addition, when such microemulsions are used as flavor delivery systems in food products, for example in beverages, they must fulfill all the requirements of these products, namely an excellent shelf-life stability over a large temperature range, at least a few months, and no formation of off-notes. They must also comply with the various regulatory requirements with regard to the ingredients that are homologated as safe for use in foods in the various markets of commercialization and the present invention addresses this problem in particular.

In the field of beverage flavoring, the use of microemulsions has been described in particular by Wolf et al. in US 4,835,002. The latter document discloses microemulsions of edible oils in a matrix of water and certain alcohols, together with food-grade surfactants. More particularly, this document describes compositions comprising from 0.01 to 45% by weight, and preferably from 1 to 25% by weight, of oil, from about 0.1 to 60%, and preferably from 1 to 30% by weight, of surfactant and from 20 to 95%, and preferably 25 to 80% by weight, of a polyol including ethanol, propylene glycol, sugars such as dextrose, sucrose, fructose and other. The proportion of alcohol needed in said microemulsion compositions is of at least 20% by weight in order to obtain a clear system. Propylene glycol is selected as preferred alcohol.

US 5,283,056 describes compositions of transparent oil-in-water microemulsion concentrates, consisting essentially of water, one or more hydrophobic flavor or fragrance oils and one or more surfactants. Said microemulsions are especially intended for the preparation of mouthwash solutions and are essentially free of lower alkanols. Nevertheless, these compositions comprise large amounts of surfactant, particularly when high oil content is required. Moreover, the claimed microemulsions show poor shelf-life stability even at room temperature, that would not be convenient for beverage applications.

Yet one more recent document, i.e. US patent 6,902,756, owned by the present applicant, describes the preparation of a high oil loading, transparent, microemulsion with an optimized ratio between the surfactant system and the alcohol. There is however still a need to improve on the latter and to provide microemulsions based on surfactant systems which are widely accepted throughout the World for food consumption(s) and can be employed in clear beverage technology as a source of water-soluble flavours.

The present invention addresses precisely this need. We have now been able to establish a novel and advantageous formulation of edible, perfectly clear, high oil loaded microemulsions that are entirely composed of food grade quality components, which comprise a very low level of surfactant/co-surfactant, and which prove excellent organoleptically and from the point of view of the thermodynamic stability, both as emulsions and in the end-products where they are employed as flavor carriers, namely in clear beverages.

### Brief Summary of the Invention

Thus, the present invention relates to a clear, high oil loaded, thermodynamically stable, oil-in-water microemulsion comprising a specific surfactant system. It concerns more particularly an edible, clear, high flavor oil loaded, thermodynamically stable microemulsion comprising:
a) at least 10 % by weight of a flavor oil ;
b) between 10 and 30% by weight of a surfactant system ;
c) an hydrophilic phase formed of water and a water-soluble co-solvent or of a water-soluble co-solvent alone ;
d) optionally a vitamin, an antioxidant or other additive of common use in food microemulsions ;
characterized in that the surfactant system is a combination of a sugar ester of a fatty acid with lecithin and has a hydrophilic lipophilic balance, HLB, comprised between 6 and 18.

These formulations may comprise a very small amount of surfactant and alcohol, compared to the flavor oil concentration, and have excellent thermodynamic and organoleptic stability over large temperature ranges. Moreover, they can be easily incorporated into clear beverages, without affecting the transparency of the latter.

According to surprisingly advantageous embodiments of the invention, the weight of flavor oil is at least 20%, and more preferably above 25%, of the weight of microemulsion.

Since the microemulsions of the invention are particularly stable and clear, and can be highly loaded in oil, they are prized flavor carriers, in particular for clear beverages. On the other hand, because of their particular stability, they may also constitute a good starting product to be extruded for the preparation of encapsulated flavors.

More objects, aspects and advantages of the invention will become apparent from the detailed description hereafter.

### Detailed Description of the Invention

It has thus been unexpectedly discovered that even with a low ratio of co-solvent relative to surfactant in its composition, a microemulsion may comprise a high amount of oil and also be particularly stable, notably at high temperatures.

As previously cited, one object of the present invention is to provide an edible, clear, high flavor oil loaded, thermodynamically stable microemulsion comprising:
a) at least 10 % by weight of a flavor oil ;
b) between 10 and 30% by weight of a surfactant system ;
c) an hydrophilic phase formed of water and a water-soluble co-solvent or of a water-soluble co-solvent alone ;
d) optionally a vitamin, an antioxidant or other additive of common use in food microemulsions ;
and wherein the surfactant system is a combination of a sugar ester of a fatty acid with lecithin and having a hydrophilic lipophilic balance, HLB, comprised between 6 and 18.

In a preferred embodiment, a microemulsion according to the invention consists of ingredients (a) to (d) in the amounts indicated above.

In a preferred embodiment, the amount of flavor oil is at least 20% by weight, relative to the weight of microemulsion, such that the amount of surfactant is clearly below that of flavor oil. As it is well known in the art, a large amount of surfactant in a system such as that of a microemulsion may be responsible for many drawbacks such as off-notes, foaming and also high viscosity. Therefore the possibility of using a low amount of surfactant, while keeping a high amount of oil, is very advantageous for the microemulsion applications such as the flavoring of clear beverages.

All the microemulsions of the invention may be advantageously used as flavor carriers in beverages where they provide clear, essentially foam-free beverages, without oil ring formation or soapy off-notes, perfectly compliant with regulatory requirements for beverage consumption purposes.

Fundamentally, the microemulsions according to the present invention consist of dispersed edible oils in a matrix of water and certain alcohols by using surfactants of the food grade type.

The edible oils dispersed in said matrix of water and alcohol may be one or a mixture of oils soluble in one another. The oils constitute the oil phase of the microemulsion, whereas the alcohol-water medium constitutes the continuous phase. Specific examples of oils which may be used alone or in admixture in the microemulsions of the present invention include natural extracts such as lemon, berry, lime, orange, grapefruit, tangerine, mandarin, kumquat, bergamot oil or any mixture thereof.

In a particular embodiment, the oil phase further comprises an oil-soluble antioxidant such as for instance tocopherol, which provides a better stability of the microemulsion.

The continuous water-phase is preferably a mixture of water with propylene glycol (PG), glycerol, or mixtures of both. It can contain specific water-soluble ingredients such as antioxidants, antimicrobial, or preservative agents.

Particularly preferred microemulsions consist of more than 20% w/w flavor, while the surfactant systems is less than 20% w/w. Surprisingly, these microemulsions display excellent stability and clarity at temperatures that range between 0°C up to 40°C, both in initial formulation and in applications. It is worth to mention that the corresponding beverages are easily prepared by simple mixing of the specific ingredients.

The surfactant system of the microemulsion is a mixture of a sugar ester of a fatty acid with lecithin. Preferably, the sugar ester is a sucrose ester of a fatty acid. Products such as that sold by the Mitsubishi Corporation under the tradename Ryoto Sugar Ester Solution LWA-1570 provided surprisingly useful microemulsions according to the invention, providing preferred embodiments of the latter. Other examples include Sugar Ester type L-1695, D-1570, and P-1670.

The amounts in which the sugar ester of a fatty acid is present in the microemulsion vary in a wide range of values. Preferred embodiments contain amounts of sugar ester not above 25% by weight, relative to the weight of microemulsion.

The lecithin is preferably present in an amount of between 0.5 and 10%, and preferably 0.5 to 5%, by weight, relative to the total weight of the microemulsion. Any type of commercial food grade lecithin may be used, but particularly useful results in beverage applications were observed when lecithin from soybean sources were used. In this context, specific examples of useful commercial lecithin products can be found in the specific embodiments of the invention described further on.

The continuous phase of invention's microemulsions is essentially formed of water together with a water-soluble co-solvent or even essentially formed of just this water soluble co-solvent, which is preferably a polyalcohol having at least two hydroxyl groups. Preferred such materials are polyalcohols selected from the group consisting of propylene glycol, mono- and di-saccharide sugars and sugar alcohols, such as sorbitol, xylitol, mannitol and glycerol. More preferably, there will be used propylene glycol, glycerin (also known as glycerol) and mixtures of both.

According to a specific embodiment of the invention, the weight ratio between surfactant and co-solvent is between 0.5 and 2.0 and more preferably there will be a large excess of solvent relative to the amount of surfactant system. This embodiment is particularly advantageous since it provides the possibility of having high oil content products of unexpected stability, while reducing the proportion of surfactant to a minimum.

The water-soluble solvent is present in the microemulsion of the invention in a preferred amount of 25% by weight or more, relative to the total weight of the microemulsion.

Finally, the amount of water in these microemulsions can be easily adjusted by the person skilled in the art as a function of the other components, and in particular water may be used in amounts of less than 20% by weight, relative to the total microemulsion weight, to complete the continuous phase of the latter.

A microemulsion according to the invention is prepared by adding to the prior made continuous phase (mixture of water and polyhydric alcohol), the sugar ester surfactant, to provide a clear surfactant/water-phase dispersion. The oil-phase is added to this surfactant dispersion and the mixture is gently stirred, to form a milky dispersion. In the final step, the lecithin is added to convert it to a clear microemulsion.

Following the above method of preparation, stable, transparent clear microemulsions with a high oil content have been prepared by employing a minimum amount of surfactant and an optimized amount of alcohol.

By "clear", it is meant that the microemulsion preferably has a Hunter "L" transmission of at least about 80, more preferably at least about 85, most preferably at least about 90, e.g. at least about 95. The Hunter L transmission is assessed by measuring the L color value against distilled water with a Hunter ColorQUEST(R) colorimeter made by Hunter Associates Laboratory, Reston, Va.

The microemulsions may also comprise antioxidants, vitamins, in particular vitamin E, sodium benzoate and other such ingredients.

Due to an excellent thermodynamic stability, clarity and no oil-ring formation in the formulated products, the microemulsions are advantageous flavor sources for the beverage market, in particular for clear beverage formulations. One further object of the invention is therefore the use of a microemulsion as described above as carrier of flavor oils for beverage formulations, and further clear beverages formulated on the base of such microemulsions.

In such beverages, carbonated or not, the emulsion of the invention will be typically present in proportions comprised between 0.01 and 0.15% of the total weight of the composition or product to be flavored. Clear beverages formulated with the help of a microemulsion of the invention present no off-notes and the stability of the final formulation is excellent.

Clear beverages flavored with a microemulsion according to the invention may advantageously comprise antioxidant ingredients.

The invention therefore also relates to a method to impart, improve, enhance or modify the flavoring properties of a flavoring composition or a flavored product which comprises adding to said composition or product a microemulsion as defined above.

Finally, it has been unexpectedly established that the microemulsions of the invention can be advantageously used as feed-in sources of flavor oil in extrusion technologies. By extrusion technologies it is meant here methods which typically rely on the use of carbohydrate matrix materials which are heated to a molten state and combined with an active ingredient, before extruding and quenching the extruded mass to form a glass which protects said ingredient. A great deal of prior art describes extrusion techniques. Typical citations include in particular US 3,704,137, US 4,707,367, US 4,610,890, WO 99/27798, US 4,977,934, EP 202409.

The invention will now be illustrated by way of the following examples but is not limited to these examples. Temperatures are given in degrees centigrade and the abbreviations have the meaning common in the art.

### Embodiments of the Invention

### Examples 1-5

### Preparation and use of microemulsions according to the invention

### General Method

The flavor microemulsions according to the invention were prepared by first admixing water, propylene glycol and a sugar ester surfactant. To the resulting pre-microemulsion there were then added any other water-soluble additives.
Separately, the selected flavor was mixed with the appropriate amount of lecithin, and other oil-soluble additives, until a well-dispersed clear/translucent system formed. Then, at room temperature and under gentle stirring, the specified amount of pre-microemulsion was added to the flavor-lecithin mixture. After a few minutes of mixing, sometimes even instantly, a clear and stable flavor microemulsion resulted. The order of addition of the essential ingredients was not critical. However, by following the mentioned addition order, it was possible to accelerate thermodynamic equilibrium between the mixing phases, in other words, to speed the formation-time of the microemulsion.

### Preparation of pre-microemulsion

Following the method described above a typical pre-microemulsion was prepared with the following ingredients, in the amounts indicated:

| Ingredient | Amount (g) | Active % |
|---|---|---|
| Ryoto Sugar Ester LWA 1570* | 165.00 | 12.710 |
| Propylene Glycol | 167.20 | 32.200 |
| Spring Water | 187.00 | 55.090 |
| Total | 519.20 | 100.00 |

| | | |
|---|---|---|
| * Mitsubishi Corporation | | |

The meaning of active above is derived from the fact that Ryoto Sugar Ester LWA-1570 commercially available as a solution that contains 40% sugar ester, which is the active; the rest is being a blend of water and ethanol (56% water and 4% ethanol).
This pre-microemulsion showed a surface tension of 29.90 +/- 0.06 mN/m and a droplet size of 29.1 nm.

### Preparation of microemulsions according to the invention

Six different flavor samples, as indicated below, all containing 0.01% by weight of tocopherol, and all commercially available from Firmenich Citrus Center, Florida, US were admixed with lecithin and the oily phase thus formed admixed with the respective pre-microemulsion to prepare six clear microemulsions according to the present invention, as summarized in the table presented here-below.

| Ingredient | Microemulsion Sample/ w/w % | | | | |
|---|---|---|---|---|---|
| | A | B | C | D | E |
| Ascorbic Acid | 0.04 | 0.04 | 0.04 | 0.04 | 0.04 |
| Centrolex F Lecithin* | 2.11 | 1.86 | 1.77 | 4.76 | 4.85 |
| Flavor** | 29.38 | 29.43 | 29.42 | 28.56 | 28.53 |
| Ryoto Sugar Ester LWA 1570 | 8.70 | 8.73 | 8.74 | 8.47 | 8.46 |
| Propylene Glycol | 22.05 | 22.11 | 22.14 | 21.46 | 21.44 |
| Spring Water | 37.72 | 37.83 | 37.89 | 36.71 | 36.68 |
| Total | 100.00 | 100.00 | 100.00 | 100.00 | 100.00 |

| | | | | | |
|---|---|---|---|---|---|
| * origin: Central Soya, IN 46801-14000, USA ** origin: Firmenich Citrus Center, Florida, USA | | | | | |

The respective flavors used in the above microemulsions are indicated in the table below, together with their surface tension characteristics.

| | Microemulsion Sample | | | | |
|---|---|---|---|---|---|
| | A | B | C | D | E |
| Flavor | Nat. Orange | Nat. Grapefruit | Nat. Lemon | Nat. Lemon - Lime | Nat. Lime Tahiti |
| Surface Tension (mN/m) | 29.23 +/- 0.02 | 29.14 +/- 0.01 | 29.45 +/- 0.04 | 29.12 +/- 0.04 | 29.56 +/- 0.04 |

After two weeks, all the flavor microemulsions formulated as indicated above displayed excellent clarity and stability at room temperature.
Clear beverages were created with these microemulsions.

## Claims

1. An edible, clear, high flavor oil loaded, thermodynamically stable oil-in-water microemulsion comprising:
a) at least 10 % by weight of a flavor oil ;
b) between 10 and 30% by weight of a surfactant system;
c) an hydrophilic phase formed of water and a water-soluble co-solvent or of a water-soluble co-solvent alone ;
d) optionally a vitamin, an antioxidant or other additive of common use in food microemulsions ;
**characterized in that** the surfactant system is a combination of a sugar ester of a fatty acid with lecithin and has a hydrophilic lipophilic balance, HLB, comprised between 6 and 18.

2. An oil-in-water microemulsion according to claim 1, wherein the weight of flavor oil is at least 20%, and more preferably above 25%, of the weight of microemulsion.

3. An oil-in-water microemulsion according to claim 1 or claim 2, wherein the sugar ester is present in an amount not above 25% by weight, relative to the weight of the emulsion.

4. An oil-in-water microemulsion according to any one of the preceding claims, wherein the lecithin is present in an amount of between 0.5 and 10%, and preferably 0.5 to 5%, by weight, relative to the total weight of the microemulsion.

5. An oil-in-water microemulsion according to any one of the preceding claims, wherein the co-solvent is a polyalcohol having at least two hydroxyl groups.

6. An oil-in-water microemulsion according to any one of the preceding claims, wherein the content in water-soluble co-solvent is 30% or more by weight, relative to the weight of microemulsion.

7. An oil-in-water microemulsion according to any one of the preceding claims, wherein the hydrophilic phase is formed of water and propylene glycol or glycerol, in a relative weight % ratio comprised between 1:2 and 2:1.

8. A clear beverage comprising a microemulsion according to any one of the preceding claims.

9. Use of a microemulsion according to any one of claims 1 to 7 to impart, improve, enhance or modify the organoleptic properties of a flavoring composition or a flavored product, comprising the addition of the microemulsion to said composition or product as a flavor carrier.

## Patentansprüche

1. Essbare, klare, thermodynamisch stabile Öl-in-Wasser-Mikroemulsion mit hoher Geschmacksölbeladung, umfassend:
a) mindestens 10 Gew.-% eines Geschmacksöls;
b) 10 bis 30 Gew.-% eines Tensidsystems;
c) eine hydrophile Phase, die aus Wasser und einem wasserlöslichen Hilfslösungsmittel oder aus einem wasserlöslichen Hilfslösungsmittel als solchem gebildet ist;
d) wahlweise ein Vitamin, ein Antioxidationsmittel oder ein anderes, allgemein in Nahrungsmittelmikroemulsionen verwendetes Zusatzmittel;
**dadurch gekennzeichnet, dass** das Tensidsystem eine Kombination eines Zuckeresters einer Fettsäure mit Lecithin ist und eine Hydrophil-Lipophil-Gleichgewicht, HLB, aufweist, das zwischen 6 und 18 liegt.

2. Öl-in-Wasser-Mikroemulsion nach Anspruch 1, wobei das Gewicht des Geschmacksöls mindestens 20 % und noch bevorzugter mehr als 25 %, auf das Gewicht der Mikroemulsion bezogen, beträgt.

3. Öl-in-Wasser-Mikroemulsion nach Anspruch 1 oder Anspruch 2, wobei der Zuckerester in einer Menge von nicht mehr als 25 Gew.-%, auf das Gewicht der Emulsion bezogen, vorliegt.

4. Öl-in-Wasser-Mikroemulsion nach irgendeinem der vorhergehenden Ansprüche, wobei das Lecithin in einer Menge zwischen 0,5 und 10 % und bevorzugt 0,5 bis 5 Gew.-%, auf das Gesamtgewicht der Mikroemulsion bezogen, vorliegt.

5. Öl-in-Wasser-Mikroemulsion nach irgendeinem der vorhergehenden Ansprüche, wobei das Hilfslösungsmittel ein Polyalkohol ist, der mindestens zwei Hydroxylgruppen aufweist.

6. Öl-in-Wasser-Mikroemulsion nach irgendeinem der vorhergehenden Ansprüche, wobei der Gehalt an wasserlöslichem Hilfslösungsmittel 30 Gew.-% oder mehr, auf das Gewicht der Mikroemulsion bezogen, beträgt.

7. Öl-in-Wasser-Mikroemulsion nach irgendeinem der vorhergehenden Ansprüche, wobei die hydrophile Phase aus Wasser und Propylenglykol oder Glycerin in einem relativen %-Gewichtsverhältnis, das zwischen 1:2 und 2:1 liegt, gebildet ist.

8. Klares Getränk umfassend eine Mikroemulsion nach irgendeinem der vorhergehenden Ansprüche.

9. Verwendung einer Mikroemulsion nach irgendeinem der Ansprüche 1 bis 7 zum Verleihen, Verbessern, Erhöhen oder Modifizieren der organoleptischen Eigenschaften einer aromatisierenden Zusammensetzung oder eines aromatisierten Produkts, umfassend das Zusetzen der Mikroemulsion zu der Zusammensetzung oder dem Produkt als Geschmacksträger.

## Revendications

1. Microémulsion huile-dans-eau thermodynamiquement stable, hautement chargée en huile aromatisante, transparente, comestible, comprenant:
a) au moins 10% en poids d'une huile aromatisante;
b) entre 10 et 30% en poids d'un système tensioactif;
c) une phase hydrophile formée d'eau et d'un co-solvant hydrosoluble ou d'un co-solvant hydrosoluble seul;
d) facultativement, une vitamine, un antioxydant ou un autre additif d'usage commun dans des microémulsions alimentaires;
**caractérisée en ce que** le système tensioactif est une combinaison d'un ester de sucre d'un acide gras avec de la lécithine et a un équilibre hydrophile lipophile, HLB, compris entre 6 et 18.

2. Microémulsion huile-dans-eau selon la revendication 1, dans laquelle le poids de l'huile aromatisante est d'au moins 20%, et plus préférentiellement au-dessus de 25%, du poids de la microémulsion.

3. Microémulsion huile-dans-eau selon la revendication 1 ou la revendication 2, dans laquelle l'ester de sucre est présent en une quantité non supérieure à 25% en poids, par rapport au poids de l'émulsion.

4. Microémulsion huile-dans-eau selon l'une quelconque des revendications précédentes, dans laquelle la lécithine est présente en une quantité entre 0,5 et 10%, et de préférence 0,5 à 5%, en poids, par rapport au poids total de la microémulsion.

5. Microémulsion huile-dans-eau selon l'une quelconque des revendications précédentes, dans laquelle le co-solvant est un polyalcool ayant au moins deux groupes hydroxyles.

6. Microémulsion huile-dans-eau selon l'une quelconque des revendications précédentes, dans laquelle la teneur en co-solvant hydrosoluble est de 30% ou plus en poids, par rapport au poids de la microémulsion.

7. Microémulsion huile-dans-eau selon l'une quelconque des revendications précédentes, dans laquelle la phase hydrophile est formée d'eau et de propylèneglycol ou de glycérol, en un rapport en % en poids relatif compris entre 1:2 et 2:1.

8. Boisson transparente comprenant une microémulsion selon l'une quelconque des revendications précédentes.

9. Utilisation d'une microémulsion selon l'une quelconque des revendications 1 à 7 pour conférer, améliorer, exalter ou modifier les propriétés organoleptiques d'une composition aromatisante ou d'un produit aromatisé, comprenant l'addition de la microémulsion à ladite composition ou audit produit en tant que support d'arôme.
